# EUROPEAN PATENT APPLICATION

(11) **EP 1 491 988 A1**
(43) Date of publication of application: **29.12.2004**
(21) Application number: 03745913.8
(22) Date of filing: 04.04.2003
(51) Int. Cl.: G06F 1/26, G06F 1/32

(54) **MULTIPLE POWER SOURCE SEMICONDUCTOR INTEGRATED CIRCUIT**

(30) Priority: 04.04.2002 JP 2002102330
(71) Applicant: MATSUSHITA ELECTRIC INDUSTRIAL CO., LTD., Kadoma-shi, Osaka 571-8501 (JP)
(72) Inventor: TANIGUCHI, Kazuya, Kadoma-shi, Osaka 571-0048 (JP); IGUCHI, Naoya, Kusatsu-shi, Shiga 525-0055 (JP); SOMA, Yasuhito, Hirakata-shi, Osaka 573-0052 (JP); HAYAKAWA, Hisato, Yasu-gun, Shiga 520-2331 (JP)
(74) Representative: Balsters, Robert
(86) International application number: PCT/JP2003/004319
(87) International publication number: WO 2003/085501

(57) **Abstract**

In a multiple power source semiconductor integrated circuit that is manufactured using a process which generates a large leakage current, supply of power to a function block that is not being used is stopped to reduce unnecessary power consumption. A multiple power source semiconductor integrated circuit (1) includes first to fourth function blocks (11) to (14) that are supplied with power from first to fourth power supply circuits (3) to (6), respectively, and a power supply control circuit (40) that controls supply of power by the first to fourth power supply circuits (3) to (6) under the control of a microcomputer as the first function block (11). The power supply control circuit (40) halts the supply of power to the first to fourth function blocks (11) to (14) when receiving prescribed data from the first function block (11), and restarts the supply of power when receiving a first or second interrupt signal (55) or (56) from outside.

## Description

### Technical Field

The present invention relates to power saving of a multiple power source semiconductor integrated circuit and, more particularly, to power supply control of a multiple power source semiconductor integrated circuit in which plural function blocks are packaged.

### Background Art

Recently, portable electronic devices such as portable compact disc players (hereinafter, referred to as CD players) or portable minidisc players have become widespread. Such electronic device includes, in many cases, a signal processing LSI which is a semiconductor integrated circuit for implementing characteristic functions of the device, for example, reading data from a compact disc and converting the same into an audio signal to output the same, and a microcomputer which is a general-purpose semiconductor integrated circuit for controlling the signal processing LSI.

The following summarizes characteristics of the signal processing LSI and the microcomputer.

It is required that power consumption of the signal processing LSI during operation should be small, because when the signal processing LSI is driven by batteries, the operating time (audio reproduction time in the case of CD players) per battery becomes longer as the power consumption during the operation gets smaller. Thus, the signal processing LSI is manufactured using a Low-Vt process (Vt is an abbreviate of a threshold voltage) which can lower the operating voltage. Since the Low-Vt process is a process that can lower the operating voltage but increases a leakage current, some measures are taken by powering off the signal processing LSI using the Low-Vt process when not used, thereby to suppress the leakage current and reduce the battery consumption. In addition, the signal processing LSI is a multiple power source semiconductor integrated circuit in which a driving voltage of an interface circuit for peripheral circuits (high voltage driving) and a driving voltage of an internal circuit (low voltage driving) are different from each other, and it reduces the power consumption during the operation by minimizing the driving voltage of the internal circuit.

On the other hand, the microcomputer is commonly used constantly being powered on, because it must accept instructions for the electronic devices from the user. Accordingly, the microcomputer is manufactured by using a High-Vt process in which the leakage current is small.

Further, as the portable electronic devices are further miniaturized, the efforts to package plural function blocks into one semiconductor integrated circuit have been made. In many cases, the respective function blocks need different driving voltages. Accordingly, by integrating the plural function blocks which need the different driving voltages into one semiconductor integrated circuit, the number of power sources for the semiconductor integrated circuit is further increased.

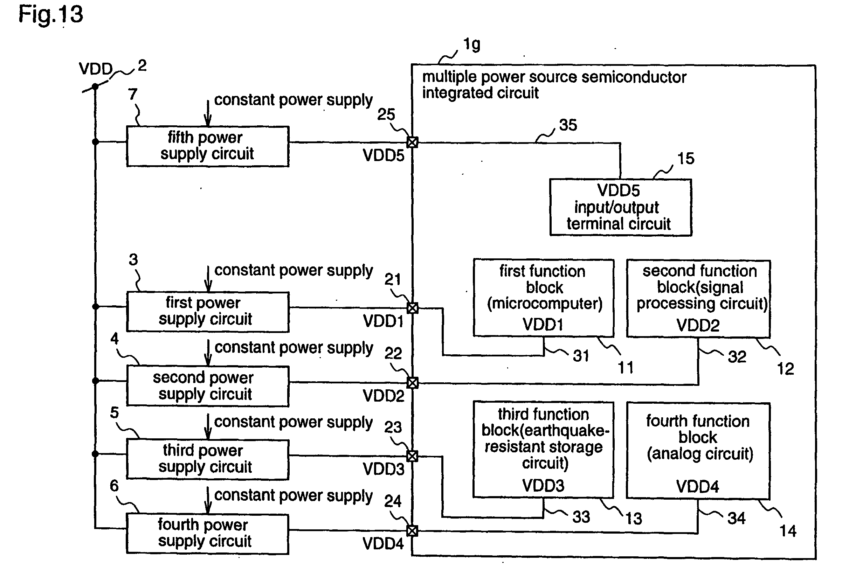

Figure 13 is a block diagram illustrating a conventional multiple power source semiconductor integrated circuit, and power supply circuits for the multiple power source semiconductor integrated circuit. In this figure, reference numeral 1g denotes a multiple power source semiconductor integrated circuit, and numeral 2 denotes a main power source, numerals 3 to 7 denote first to fifth power supply circuits each including a DC/DC converter that supplies an arbitrary power supply voltage, and a power supply switch. Reference characters VDD1 to VDD5 denote arbitrary power supply voltages. Numerals 11 to 14 denote first to fourth function blocks that are included in the multiple power source semiconductor integrated circuit 1g, numeral 15 denotes an input/output terminal circuit of the multiple power source semiconductor integrated circuit 1g, numerals 21 to 25 denote external power supply terminals that receive the corresponding power supply voltages VDD1 to VDD5 which are supplied to the multiple power source semiconductor integrated circuit 1g, and numerals 31 to 35 denote internal power supply lines of the multiple power source integrated circuit 1g.

Figure 13 shows an example in which the first function block 11 is a microcomputer for controlling the system, the second function block 12 is a signal processing circuit, the third function block 13 is an earthquake-resistant storage circuit, and the fourth function block 14 is an analog circuit. Further, the respective power supply switches included in the power supply circuits 3 to 7 are always ON, and always supply power.

Next, the operation of the conventional multiple power source semiconductor integrated circuit 1g that is constructed as described above will be described.

When the main power source 2 is turned on, the power supply circuits 3 to 7 transform a power supply voltage which is supplied from the main power source 2 into arbitrary power supply voltages VDD1 to VDD5, and supply these voltages to the multiple power source semiconductor integrated circuit 1g. The multiple power source semiconductor integrated circuit 1g receives the power supply voltages VDD1 to VDD5 which are supplied from the power supply circuits 3 to 7 through the corresponding external power supply terminals 21 to 25. The power which is received through the external power supply terminals 21 to 25 is supplied to the function blocks 11 to 14 and the input terminal circuit 15 via the internal power supply lines 31 to 35. The respective function blocks 11 to 14 and the input/output terminal circuit 15 execute respective processing for implementing prescribed functions.

Here, the power supply circuits 3 to 7 constantly supply power to the respective function blocks 11 to 15 through the corresponding external power supply terminals 21 to 25, and the power is continuously supplied even when the function blocks 11 to 14 are not used.

Since the conventional multiple power source semiconductor integrated circuit is constructed as described above, the respective function blocks are always powered on, regardless of whether the function blocks are used or not. Conventionally, unnecessary power consumption has been reduced by stopping clock oscillation, as represented by a HALT mode of the microcomputer, while with development of recent super-micromachining and high-degree integration technique, it has becomes impossible to neglect influences of a static power supply current that flows in a steady state, which is exerted on the power consumption.

In cases where plural function blocks are integrated on one semiconductor, even when it is possible to stop supply of power to each of the function blocks, the power consumption of the signal processing circuit and the microcomputer is increased when these units are manufactured by the same process, because characteristics which are necessary in the respective manufacturing processes are different from each other. For example, when they are manufactures by the Low-Vt process to reduce the power consumption during the operation, the leakage current in the microcomputer which is constantly supplied with power, i.e., the leakage current of the first function block 11 becomes large. When the High-Vt process is employed to reduce this leakage current, it becomes impossible to lower the operating voltage, whereby the current consumption during the operation is increased.

The present invention is made to solve the above-mentioned problem, and has for its object to provide a multiple power source semiconductor integrated circuit in which function blocks for performing signal processing and a microcomputer are integrated, thereby enabling to stop supply of power to a function block which is not used, to reduce unnecessary power consumption.

### Disclosure of the Invention

To solve the above-mentioned problem, according to Claim 1 of the present invention, there is provided a multiple power source semiconductor integrated circuit including: plural function blocks that are supplied with power from different power supply circuits, respectively: a microcomputer for controlling the supply of power to the plural function blocks, the microcomputer being one of the plural function blocks; and a power supply control circuit for controlling the supply of power by the power supply circuits under the control of the microcomputer.

According to Claim 2 of the present invention, in the multiple power source semiconductor integrated circuit of Claim 1, the power supply control circuit stops the supply of power to the microcomputer by the power supply circuit when receiving predetermined data from the microcomputer, and restarts the supply of power to the microcomputer by the power supply circuit when receiving an interrupt signal from outside.

According to Claim 3 of the present invention, in the multiple power source semiconductor integrated circuit of Claim 1 or 2, the power supply control circuit includes a register for storing the interrupt signal, and the microcomputer detects contents of the interrupt signal that is stored in the register, after restart of the supply of power.

According to Claim 4 of the present invention, in the multiple power source semiconductor integrated circuit of any of Claims 1 to 3, the power supply control circuit outputs a power cutoff signal to the power supply circuits when the supply of power by the plural power supply circuits is to be halted, and the function blocks and the power supply control circuit each include an inter-block signal fixing circuit for fixing an input logic from a circuit that is in a state where the supply of power is halted, at "L" or "H" level in accordance with the power cutoff signal.

According to Claim 5 of the present invention, in the multiple power source semiconductor integrated circuit of any of Claims 1 to 4, the power supply control circuit outputs a power cutoff signal to the power supply circuits when the supply of power by the plural power supply circuits is to be stopped, and the function blocks and the power supply control circuit each include an inter-block signal fixing circuit for fixing an output logic to a circuit to which supply of power is halted, at "L" level in accordance with the power cutoff signal.

According to Claim 6 of the present invention, the multiple power source semiconductor integrated circuit of any of Claims 1 to 5 includes: a storage means which is always supplied with power and retains system information while the supply of power to the respective function blocks is halted.

According to Claim 7 of the present invention, the multiple power source semiconductor integrated circuit of any of Claims 1 to 6 includes: an input/output terminal circuit for giving and receiving a signal to/from outside, and the power supply control circuit and the input/output terminal operate on power that is supplied from a common power supply circuit.

According to Claim 8 of the present invention, in the multiple power source semiconductor integrated circuit of any of Claims 1 to 6, the power supply control circuit operates on power that is supplied to the plural power supply circuits, and outputs an all power cutoff signal for stopping the supply of power by all of the plural power supply circuits.

As described above, according to Claim 1 of the present invention, there is provided a multiple power source semiconductor integrated circuit including: plural function blocks that are supplied with power from different power supply circuits, respectively; a microcomputer for controlling the supply of power to the plural function blocks, the microcomputer being one of the plural function blocks; and a power supply control circuit for controlling the supply of power by the power supply circuits under the control of the microcomputer. Therefore, the plural power supply circuits are controlled by the microcomputer via the power supply control circuit, whereby it is possible to perform control of supply of power to the respective function blocks as required while performing a system operation, and reduce unnecessary power consumption.

According to Claim 2 of the present invention, in the multiple power source semiconductor integrated circuit of Claim 1, the power supply control circuit stops the supply of power to the microcomputer by the power supply circuit when receiving predetermined data from the microcomputer, and restarts the supply of power to the microcomputer by the power supply circuit when receiving an interrupt signal from outside. Therefore, the plural power supply circuits are controlled by the microcomputer via the power supply control circuit, whereby it is possible to perform control of supply of power to the microcomputer, and reduce unnecessary power consumption.

According to Claim 3 of the present invention, in the multiple power source semiconductor integrated circuit of Claim 1 or 2, the power supply control circuit includes a register for storing the interrupt signal, and the microcomputer detects contents of the interrupt signal that is stored in the register, after restart of the supply of power. Therefore, the microcomputer can check the state of the system when the supply of power is restarted.

According to Claim 4 of the present invention, in the multiple power source semiconductor integrated circuit of any of Claims 1 to 3, the power supply control circuit outputs a power cutoff signal to the power supply circuits when the supply of power by the plural power supply circuits is to be halted, and the function blocks and the power supply control circuit each include an inter-block signal fixing circuit for fixing an input logic from a circuit that is in a state where the supply of power is halted, at "L" or "H" level in accordance with the power cutoff signal. Therefore, it is possible to prevent a current from flowing through a circuit on a receiving end by a signal of an intermediate voltage, which is outputted from a circuit to which supply of power is halted, thereby reducing unnecessary power consumption.

According to Claim 5 of the present invention, in the multiple power source semiconductor integrated circuit of any of Claims 1 to 4, the power supply control circuit outputs a power cutoff signal to the power supply circuits when the supply of power by the plural power supply circuits is to be stopped, and the function blocks and the power supply control circuit each include an inter-block signal fixing circuit for fixing an output logic to a circuit to which supply of power is halted, at "L" level in accordance with the power cutoff signal. Therefore, by fixing a signal that is outputted to a circuit to which supply of power is halted at "L" level, it is possible to prevent characteristics deterioration of a P-channel transistor in a circuit on a receiving end.

According to Claim 6 of the present invention, the multiple power source semiconductor integrated circuit of any of Claims 1 to 5 includes: a storage means which is always supplied with power and retains system information while the supply of power to the respective function blocks is halted. Therefore, by storing information of a state immediately before halting the supply of power to the microcomputer in the storage circuit and reading the stored information at restarting the supply of power, it is possible to restart processings from the state immediately before halting the supply of power.

According to Claim 7 of the present invention, the multiple power source semiconductor integrated circuit of any of Claims 1 to 6 includes: an input/output terminal circuit for giving and receiving a signal to/from outside, and the power supply control circuit and the input/output terminal operate on power that is supplied from a common power supply circuit. Therefore, even in a state after the microcomputer is powered off, it is possible to keep the state of the input/output terminal circuit.

According to Claim 8 of the present invention, in the multiple power source semiconductor integrated circuit of any of Claims 1 to 6, the power supply control circuit operates on power that is supplied to the plural power supply circuits, and outputs an all power cutoff signal for stopping the supply of power by all of the plural power supply circuits. Therefore, it is possible to eliminate power which is consumed by the power supply circuits in the standby state.

### Brief Description of the Drawings

Figure 1 is a block diagram illustrating structures of a multiple power source semiconductor integrated circuit according to a first embodiment of the present invention, and power supply circuits for the multiple power source semiconductor integrated circuit.
Figure 2 is a diagram for explaining a relationship between power supply control and states of power supply in the multiple power source semiconductor integrated circuit according to the first embodiment.
Figure 3 is a block diagram illustrating structures of a multiple power source semiconductor integrated circuit according to a second embodiment of the present invention, and power supply circuits for the multiple power source semiconductor integrated circuit.
Figure 4 is a block diagram illustrating structures of a principal part of a multiple power source semiconductor integrated circuit according to a third embodiment of the present invention, and power supply circuits for the multiple power source semiconductor integrated circuit.
Figure 5 is a diagram for explaining functions of the multiple power source semiconductor integrated circuit according to the third embodiment.
Figure 6 is a block diagram illustrating structures of a principal part of a multiple power source semiconductor integrated circuit according to a fourth embodiment of the present invention, and power supply circuits for the multiple power source semiconductor integrated circuit.
Figure 7 is a diagram for explaining functions of the multiple power source semiconductor integrated circuit according to the fourth embodiment.
Figure 8 is a block diagram illustrating structures of a multiple power source semiconductor integrated circuit according to a fifth embodiment of the present invention, and power supply circuits for the multiple power source semiconductor integrated circuit.
Figure 9 is a block diagram illustrating structures of a principal part of a multiple power source semiconductor integrated circuit according to a sixth embodiment of the present invention, and power supply circuits for the multiple power source semiconductor integrated circuit.
Figure 10 is a flowchart showing a procedure of an operation of the multiple power source semiconductor integrated circuit according to the sixth embodiment, in a case where the power supply is halted.
Figure 11 is a flowchart showing a procedure of an operation of the multiple power source semiconductor integrated circuit according to the sixth embodiment, in a case where the power supply is started.
Figure 12 is a block diagram illustrating structures of a multiple power source semiconductor integrated circuit according to a seventh embodiment of the present invention, and power supply circuits for the multiple power source semiconductor integrated circuit.
Figure 13 is a block diagram illustrating structures of a conventional multiple power source semiconductor integrated circuit and power supply circuits for the multiple power source semiconductor integrated circuit.

### Best Mode for Carrying out the Invention

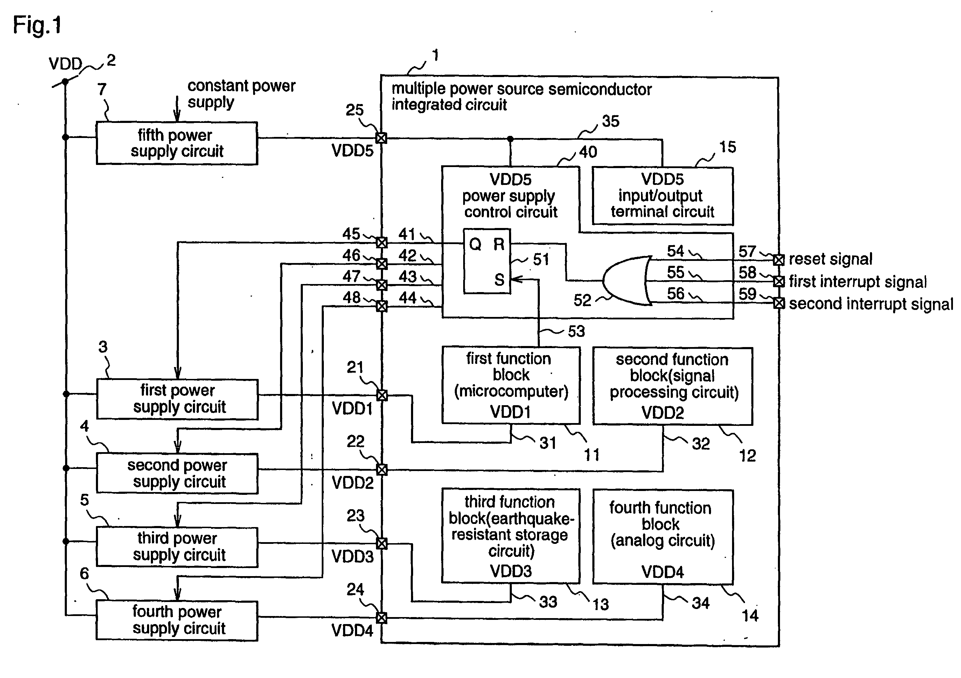

Hereinafter, embodiments of the present invention will be described with reference the drawings. Figures 1 to 12 are diagrams for explaining multiple power source semiconductor integrated circuits according to these embodiments. In these figures, the same or corresponding components are denoted by the same references, and their descriptions will not be repeated.

### (Embodiment 1)

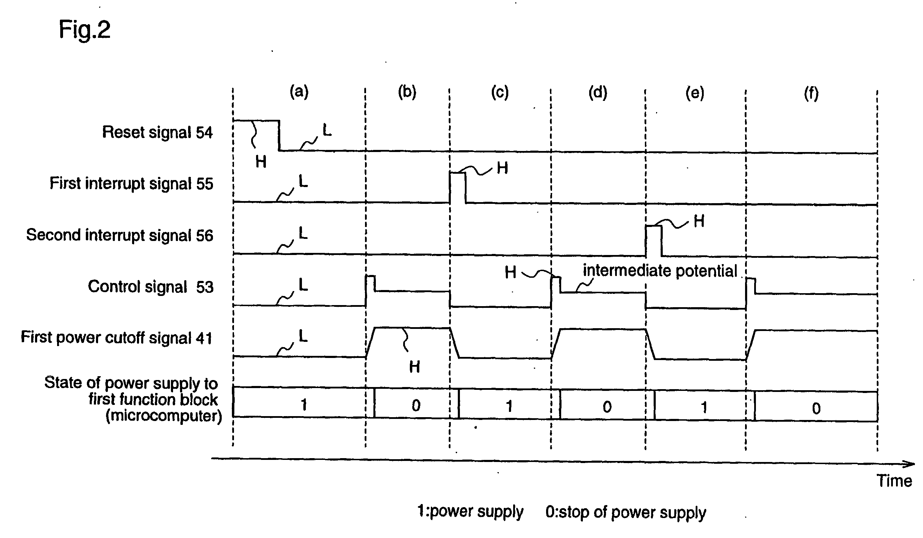

Initially, an example corresponding to a multiple power source semiconductor integrated circuit as defined in Claims 1 and 2 of the present invention will be described as a first embodiment, with reference to figures 1 and 2.

Figure 1 is a block diagram illustrating structures of a multiple power source semiconductor integrated circuit according to the first embodiment, and power supply circuits for the multiple power source semiconductor integrated circuit.

In figure 1, reference numeral 1 denotes a multiple power source semiconductor integrated circuit, numeral 2 denotes a main power source, and numerals 3 to 7 denote first to fifth power supply circuits that transform a power supply voltage from the main power source 2 into arbitrary power supply voltages VDD1 to VDD5, and supply these voltages to the multiple power source semiconductor integrated circuit. Numerals 11 to 14 denote first to fourth function blocks that are included in the multiple power source semiconductor integrated circuit 1, numeral 15 denotes an input/output terminal circuit that gives/receives a signal to/from an external device of the multiple power source semiconductor integrated circuit 1, numerals 21 to 25 denote first to fifth external power supply terminals for supplying the power supply voltages VDD1 to VDD5 to the multiple power source semiconductor integrated circuit 1, numerals 31 to 35 denote first to fifth internal power supply lines, numeral 40 denote a power supply control circuit for controlling supply of power to the respective function blocks 11 to 14, numerals 41 to 44 denote first to fourth power cutoff signals that are outputted from the power supply control circuit 40 to control supply of power by the first to fourth power supply circuits 3 to 6 and halt of the supply of power, numerals 45 to 48 denote first to fourth external output terminals for outputting the power cutoff signals 41 to 44 from the multiple power source semiconductor integrated circuit 1, numeral 51 denotes an RS latch circuit that holds the power cutoff signals, and numeral 52 denotes a three-input OR circuit that generates a reset signal for the RS latch circuit 51. Numeral 53 denotes a control signal for instructing halt of the supply of power, numeral 54 denotes a reset signal for initializing the multiple power source semiconductor integrated circuit 1, numerals 55 and 56 denote interrupt signals which are generated by key operation or the like, for starting the supply of power, and numerals 57 to 59 denote external input terminals.

The power supply control circuit 40 includes the RS latch circuit 51 that holds the power cutoff signals, and the three-input OR circuit 52 for restarting the supply of power. In the RS latch circuit 51, the first power cutoff signal 41 is connected to the Q node (output node), the control signal 53 from the first function block 11 (microcomputer) is connected to the S node (set node), and an output from the three-input OR circuit 52 is connected to the R-node (reset node). The reset signal 54 from the external input terminal 57 is connected to the first input of the three-input OR circuit, the interrupt signal 55 from the external input terminal 58 is connected to the second input, and the interrupt signal 56 from the external input terminal 59 is connected to the third input.

This figure 1 shows the example in which the first function block 11 is a microcomputer for controlling the system, the second function block 12 is a signal processing circuit, the third function block 13 is an earthquake-resistant storage circuit, and the fourth function block 14 is an analog circuit. However, the present invention does not limit the functions of the function blocks included in the multiple power source semiconductor integrated circuit 1, and the number of the function blocks. The second to fourth function blocks 12 to 14 can be signal processing circuits that implement characteristic functions of this device. Further, the multiple power source semiconductor integrated circuit 1 may include an arbitrary number of function blocks respectively having arbitrary functions.

Further, two interrupt signals, i.e., the first and the second interrupt signals 55 and 56 are provided to restart the supply of power, while the number of the interrupt signals can be one or more.

Next, the operation of the multiple power source semiconductor integrated circuit 1 that is constructed as described above will be described.

When the main power source 2 is turned on, the fifth power supply circuit 7 transforms a power supply voltage that is supplied. from the main power 2 into an arbitrary power supply voltage VDD5, and supplies the same to the multiple power source semiconductor integrated circuit 1. The first power supply circuit 3 transforms the power supply voltage that is supplied from the main power 2 into a power supply voltage VDD1, and supplies the same in accordance with the power cutoff signal 41 that is outputted from the multiple power source semiconductor integrated circuit 1. Similarly, the second power supply circuit 4 transforms the power supply voltage that is supplied from the main power 2 into a power supply voltage VDD2 and supplies the same in accordance with the power cutoff signal 42, the third power supply circuit 5 transforms the power' supply voltage that is supplied from the main power 2 into a power supply voltage VDD3 and supplies the same in accordance with the power cutoff signal 43, and the fourth power supply circuit 6 transforms the power supply voltage that is supplied from the main power 2 into a power supply voltage VDD4 and supplies the same in accordance with the power cutoff signal 44. The multiple power source semiconductor integrated circuit 1 receives the power supply voltage VDD1 that is supplied from the first power supply circuit 3 through the first external power supply terminal 21. Similarly, the multiple power source semiconductor integrated circuit 1 receives the power supply voltage VDD2 that is supplied from the second power supply circuit 4 through the second external power supply terminal 22, the power supply voltage VDD3 that is supplied from the third power supply circuit 5 through the third external power supply terminal 23, and the power supply voltage VDD4 that is supplied from the fourth power supply circuit 6 through the fourth external power supply terminal 24, respectively.

The power supply that is received through the fifth external power supply terminal 25 is supplied to the input terminal circuit 15 and the power supply control circuit 40 via the fifth internal power supply line 35, and the power supply that is received through the first external power supply terminal 21 is supplied to the first function block 11 via the first internal power supply line 31. Similarly, the power supply that is received through the second external power supply terminal 22 is supplied to the second function block 12 via the second internal power supply line 32, the power supply that is received through the third external power supply terminal 23 is supplied to the third function block 13 via the third internal power supply line 33, and the power supply that is received through the fourth external power supply terminal 24 is supplied to the fourth function block 14 via the fourth internal power supply line 34, respectively.

The power supply control circuit 40 halts supply of power in accordance with a control signal 53 that is outputted from the first function block 11 (microcomputer) which controls the entire system. The operation of the power supply control circuit 40 will be described in detail with reference to a figure.

Figure 2 is a diagram for explaining states of the control signal 53, the reset signal 54, the first interrupt signal 55, and the second interrupt signal 56, and states of the supply of power to the first function block 11. In figure 2, the horizontal axis indicates the lapse of time from period (a) to period (f). With respect to the state of supply of power to the first function block, "1" indicates a state where the power is being supplied, while "0" indicates a state where the supply of power supply is halted. The first power supply circuit 3 halts the supply of power when the first power cutoff signal 41 is at "H" level while supplying the power when the signal 41 is at "L" level.

When the reset signal 54 is in a reset state (at "H" level) (period (a)), the RS latch circuit 51 is set at "L" level, and thereafter continuously holds the "L" level regardless of the level of the reset signal 54. Accordingly, the first power cutoff signal 41 becomes "L" level, and then the first power supply circuit 3 starts the supply of power to the function block 11.

When the control signal 53 is at "H" level (periods (b) , (d), or (f)), the RS latch circuit 51 is set at "H" level, and thereafter continuously holds the "H" level regardless of the level of the control signal 53. Accordingly, the first power cutoff signal 41 becomes "H" level, and then the first power supply circuit 3 stops the supply of power to the function block 11.

When the first interrupt signal 55 is at "H" level (period (c)) or the second interrupt signal 56 is at "H" level (period (e)), the RS latch circuit 51 is set at "L" level, and thereafter continuously holds the "L" level regardless of the level of the first interrupt signal 55. Accordingly, the first power cutoff signal 41 becomes "L" level, and then the first power supply circuit 3 starts the supply of power to the function block 11.

As described above, the multiple power source semiconductor integrated circuit 1 according to the first embodiment includes the first to fourth function blocks 11 to 14 which receive supply of power from the corresponding first to fourth power supply circuits 3 to 6, respectively, and the power supply control circuit 40 which controls the supply of power from the first to fourth power supply circuits 3 to 6 on the basis of control by the microcomputer which is the first function block 11, in Which the power supply control circuit 40 stops supply of power from the respective function blocks including the microcomputer itself when it received predetermined data from the first function block 11, while restarting the supply of power when it received the first interrupt signal 55 or the second interrupt signal 56 from outside. Therefore, it is possible to perform the control of the supply of power to the respective function blocks as required while performing the system operation, whereby it is possible to reduce unnecessary power consumption by stopping the supply of power to function blocks that are not working. Accordingly, for example when the multiple power source semiconductor integrated circuit 1 is mounted on a portable electronic device, it is possible to halt the supply of power to the respective function blocks including the microcomputer that controls the system when the portable electronic device is not used, and wait for the next key operation (interrupt control) (to be in a standby state), thereby suppressing the power consumption in the standby state.

### (Embodiment 2)

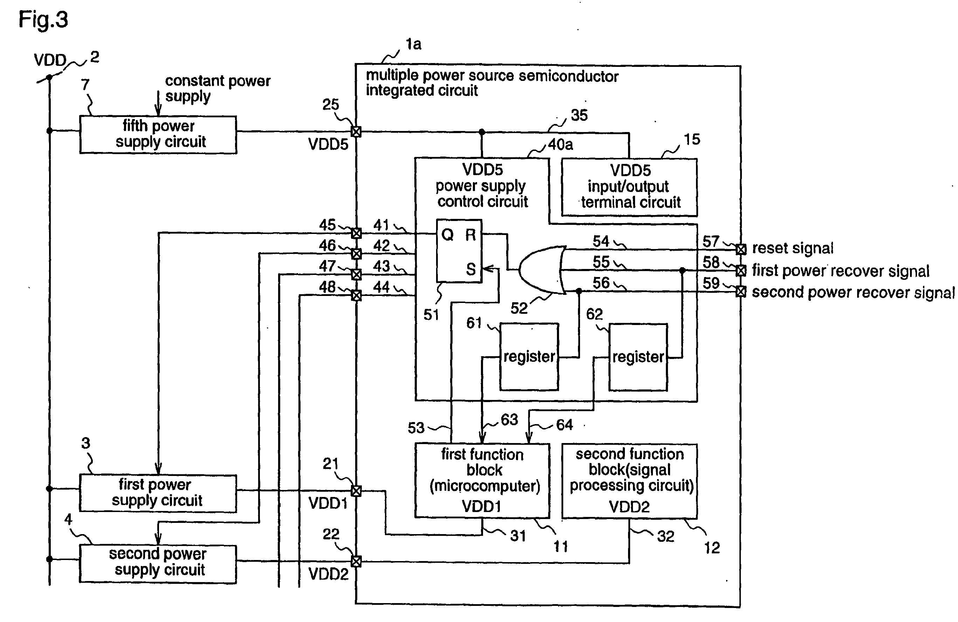

An example corresponding to a multiple power source semiconductor integrated circuit as defined in Claim 3 of the present invention will be described as a second embodiment, with reference to figure 3.

Figure 3 is a block diagram illustrating structures of a multiple power source semiconductor integrated circuit according to the second embodiment, and power supply circuits for the multiple power source semiconductor integrated circuit. In figure 3, the same or corresponding elements as those in figure 1 are denoted by the same references, and their detailed descriptions will not be given.

The multiple power source semiconductor device 1a according to the second embodiment includes a power supply control circuit 40a that is provided with a register 61 for holding data of the first interrupt signal (which is shown as a first power recover signal in figure 3) 55, and a register 62 for holding data of the second interrupt signal (which is shown as a second power recover signal in figure 3) 56, and the register 61 and the first function block 11 are connected by an internal signal 63, and the register 62 and the first function block 11 are connected by an internal signal 64, respectively.

Next, the operation of the multiple power source semiconductor integrated circuit 1a that is constructed as described above will be described.

When supply of power is restarted by the first interrupt signal 55 or the second interrupt signal 56 while the supply of power to the first to fourth function blocks 11 to 14 is halted (when the respective function blocks are on standby), the registers 61 and 62 hold data of the first and second interrupt signals 55 and 56, respectively. When the supply of power is restarted, the first function block 11 obtains the data that are held in the internal registers 61 and 62 via the internal signal 63 and 64, to check contents of the interrupt control.

As described above, according to the multiple power source semiconductor integrated circuit 1a of the second embodiment, the register 61 for holding data of the interrupt signal 55 and the register 62 for holding data of the interrupt signal 56 are provided in the power supply control circuit 40a, and the register 61 and the first function block 11 are connected by the internal signal 63, and the register 62 and the first function block 11 are connected by the internal signal 64, respectively. Therefore, when a standby state in which the supply of power is halted is released by some key operation (interrupt control) to restart the supply of power to the first to fourth function blocks 11 to 14, the first function block 11 checks contents of the key operation by checking the data that are held in the register 61 or 62, thereby executing a predetermined operation in accordance with the key operation.

### (Embodiment 3)

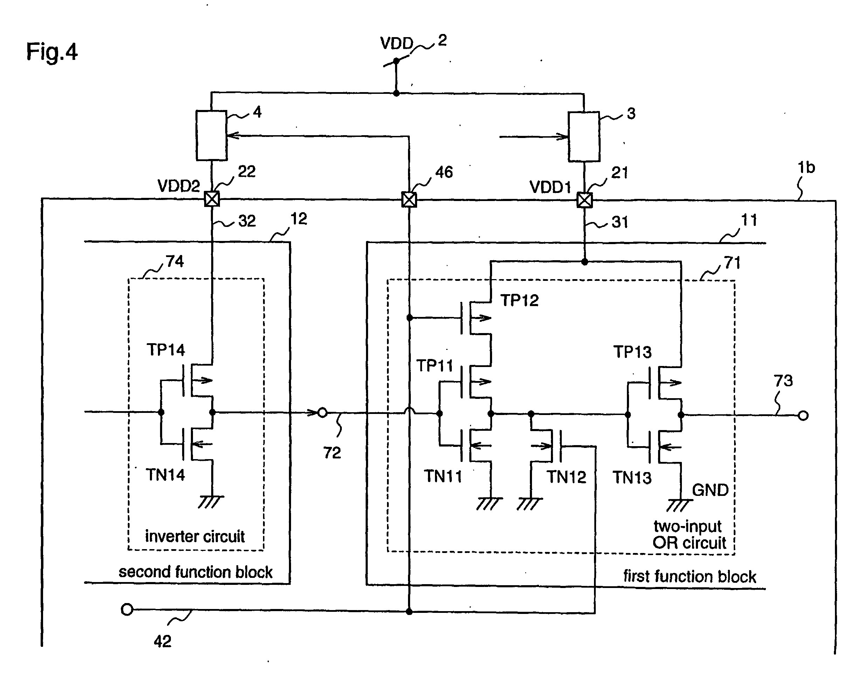

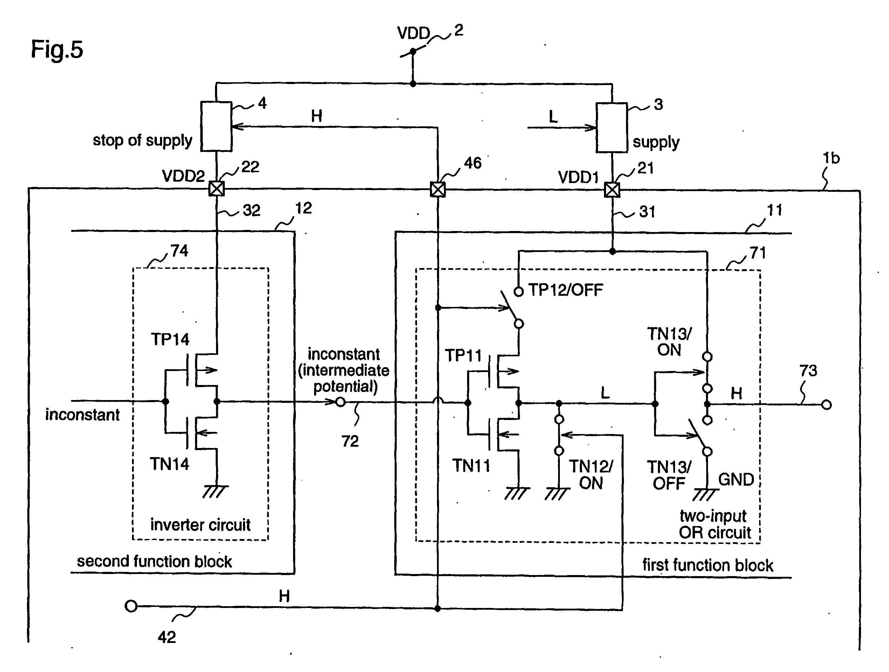

An example corresponding to a multiple power source semiconductor integrated circuit as defined in Claim 4 will be described as a third embodiment, with reference to figures 4 and 5.

Figure 4 is a block diagram illustrating structures of a principal part of a multiple power source semiconductor integrated circuit 1b according to the third embodiment, and power supply circuits for the multiple power source semiconductor integrated circuit 1b. In figures 4 and 5, the same or corresponding components as those in figure 1 are denoted by the same reference numerals, and their detailed descriptions will be omitted.

In a multiple power source semiconductor device 1b according to the third embodiment, the second function block 12 includes a CMOS inverter circuit 74 for generating a inter-block signal 72, and the first function block 11 includes a two-input OR circuit 71 that outputs an OR between the power cutoff signal 42 and the inter-block signal 72 that is outputted from the second function block 12 as the internal signal 73, to fix the inter-block signal 72 from the second function block 12 when supply of power to the second function block 12 is stopped.

The two-input OR circuit 71 that is provided in the first function block 11 is constituted by first to third p-MOS transistors TP11 to TP13, and first to third n-MOS transistor TN11 to TN13. Gate electrodes of the first p-MOS transistor TP11 and the first n-MOS transistor TN11 are connected with each other, thereby constituting an input terminal for receiving the inter-block signal 72. Gate electrodes of the second p-MOS transistor TP12 and the second n-MOS transistor TN12 are connected with each other, thereby constituting an input terminal for receiving the power cutoff signal 42. The drain electrode of the first p-MOS transistor TP11 and the drain electrodes of the first and second n-MOS transistors TN11 and TN12 are connected to the gate electrodes of the third p-MOS transistor TP13 and the third n-MOS transistor TN13, respectively. The source electrode of the first p-MOS transistor TP11 is connected to the drain electrode of the second p-MOS transistor TP12, and the source electrode of the second p-MOS transistor TP12 is connected to a first internal power supply line 31, thereby being supplied with the power supply voltage VDD1. The source electrodes of the first and second n-MOS transistors TN11 and TN12 are connected to the ground line GND. The source electrode of the third p-MOS transistor TP13 are connected to the first internal power supply line 31, thereby being supplied with the power supply voltage VDD1. The source electrode of the third n-MOS transistor TN13 is connected to the ground line GND. The drain electrode of the third p-MOS transistor TP13 and the drain electrode of the third n-MOS transistor TN13 constitute an output terminal for supplying the internal signal 73 to the first function block 11.

The CMOS inverter circuit 74 that included in the second function block 12 is constituted by a fourth p-MOS transistor TP14 and a fourth n-MOS transistor TN14, and its output is connected to the inter-block signal 72. Gate electrodes of the fourth p-MOS transistor TP14 and the fourth n-MOS transistor TN14 are connected with each other, thereby constituting an input terminal for receiving an input. The source electrode of the fourth p-MOS transistor TP14 is connected to the second internal power supply line 32, thereby being supplied with the power supply voltage VDD2. The source electrode of the fourth n-MOS transistor TN14 is connected to the ground line GND. The drain electrode of the fourth p-MOS transistor TP14 and the drain electrode of the fourth n-MOS transistor TN14 are connected with each other, thereby constituting an output terminal for supplying the inter-block signal 72.

Next, the operation of the multiple power source semiconductor integrated circuit 1b that is constructed as described above while the supply of power is halted will be described.

Figure 5 is a diagram showing an operation in a case where the power cutoff signal 42 is fixed at "H" level, to halt the supply of power to the second function block 12.

In this case, the supply of power to the inverter circuit 74 that is included in the second function block 12 is cut off, whereby the circuit 74 outputs an inconstant level (intermediate level) according to the remaining charge of the second internal power supply line 32. Further, the second p-MOS transistor TP12 that constitutes the two-input OR circuit is included in the first function 11 is turned OFF. Accordingly, the supply of power to the first p-MOS transistor TP11 is cut off, thereby avoiding transmission of an inconstant logic (intermediate potential) via the input signal 72. Further, "L" level is supplied to the respective gate electrodes of the third p-MOS transistor TP13 and the third n-MOS transistor TN13 by turning ON the second n-MOS transistor TN12, whereby the third p-MOS transistor turns in an ON state, the third n-MOS transistor turns in an OFF state, and then the output signal is fixed at a "H" level.

As described above, according to the multiple power source semiconductor integrated circuit 1b of the third embodiment, when the supply of power to the second function block 12 is halted in accordance with the power cutoff signal 42, the input logic from the second function block 12 to the first function block 11 is fixed at "H" level. Therefore, while the supply of power to the second function block 12 is halted, it is possible to avoid transmission of the inconstant logic from the second function block 12 and generation of a flow-through current due to input of the intermediate potential to the gate electrode.

The third embodiment describes the example where the second function block 12 is provided with the CMOS inverter circuit 74, and the first function block 11 is provided with the two-input OR circuit 71. However, it is also possible to provide a CMOS inverter circuit for generating an internal signal at respective output stages of the first to fourth function blocks 11 to 14, the input/output terminal circuit 15, and the power supply control circuit 40, and a two-input OR circuit that outputs an OR between the power cutoff signal and an inter-block signal from a function block of the next stage as an internal signal, at their input stages. Accordingly, in the first to fourth function blocks 11 to 14, the input/output terminal circuit 15 and the power supply control circuit 40, when supply of power to a function block that is connected in the following stage is halted, it is possible to avoid transmission of an inconstant logic from the following function block and generation of a flow-through current due to input of an intermediate potential to the gate electrode.

### (Embodiment 4)

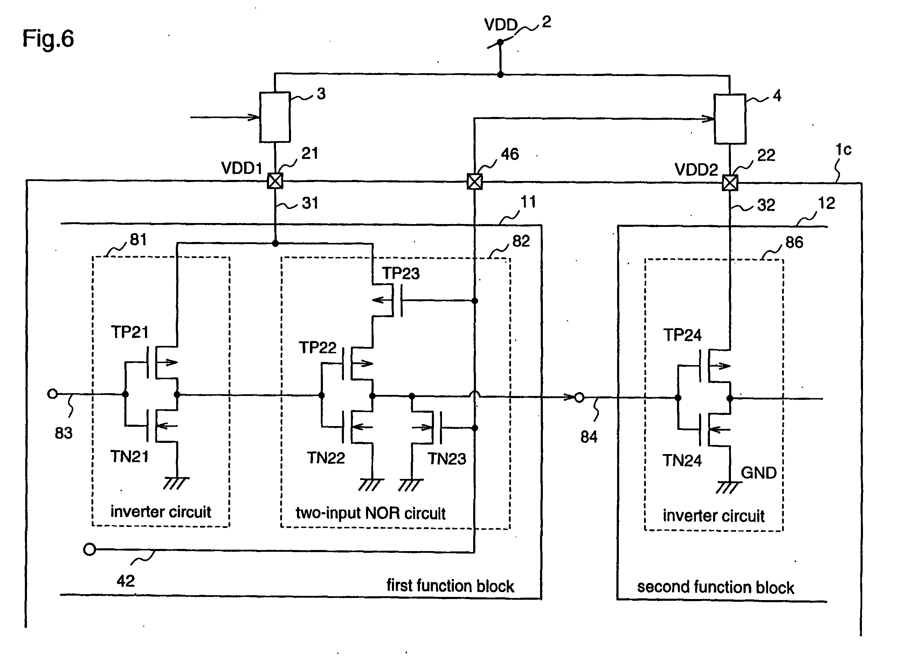

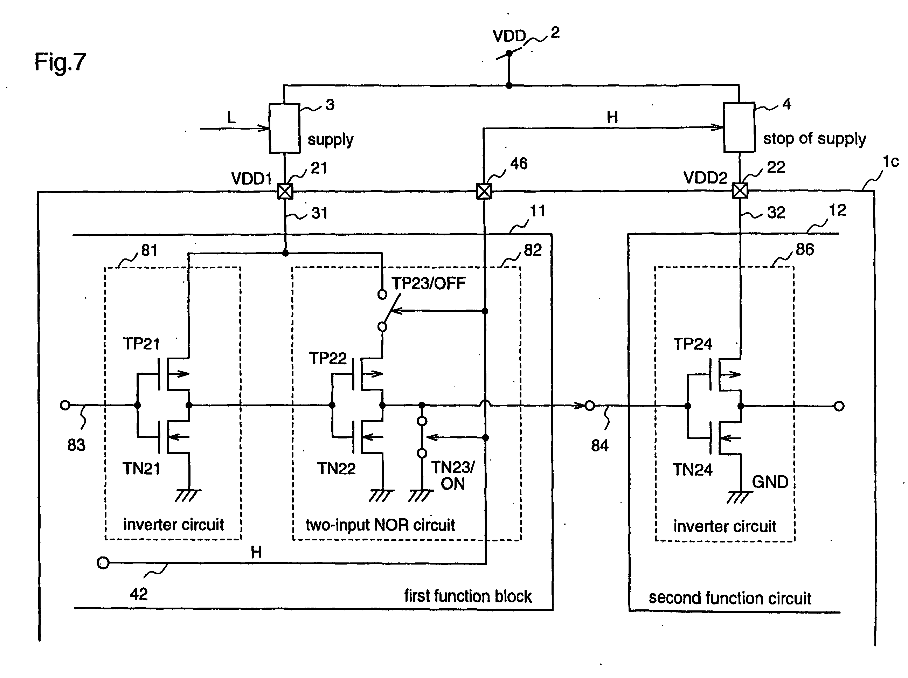

An example corresponding to a multiple power source semiconductor integrated circuit as defined in Claim 5 of the present invention will be described as a fourth embodiment, with reference to figures 6 and 7.

Figure 6 is a block diagram illustrating structures of a principal part of a multiple power source semiconductor integrated circuit 1c according to the fourth embodiment, and power supply circuits for the multiple power source semiconductor integrated circuit 1c. In figures 6 and 7, the same or corresponding components as those in figure 4 are denoted by the same references, and their detailed descriptions will be omitted.

In the multiple power source semiconductor device 1c according to the fourth embodiment, the first function block 11 includes a first inverter circuit 81, and a two-input NOR circuit 82 that outputs a NOR between an output from the first inverter circuit 81 and a power cutoff signal 42 as an inter-block signal 84, to fix the inter-block signal 84 to the second function block 12 at "L" level when power supply to the second function block 12 is halted, and the second function block 12 includes a second inverter circuit 86 to which the inter-block signal 84 from the first function block 11 is inputted.

The input node of the first inverter circuit 81 that is provided in the first function block 11 is connected to an internal signal 83, and the output node thereof is connected to a second input of the two-input NOR circuit 82. The first inverter circuit is constituted by a first p-MOS transistor TP21 and a first n-MOS transistor TN21. Gate electrodes of the first p-MOS transistor TP21 and the first n-MOS transistor TN21 are connected with each other, thereby constituting an input terminal for receiving the internal signal 83. The source electrode of the first p-MOS transistor TP21 is connected to the first internal power supply line 31, thereby being supplied with the power supply voltage VDD1. The source electrode of the first n-MOS transistor TN21 is connected to the ground line GND. The drain electrode of the first p-MOS transistor TP21 and the drain electrode of the first n-MOS transistor TN21 are connected with each other, thereby being connected to a first input of the two-input NOR circuit 82. Further, the second input of the two-input NOR circuit 82 is connected to the power cutoff signal 42, and the output thereof is connected to the inter-block signal 84, respectively. The two-input NOR circuit 82 is constituted by second and third p-MOS transistors TP22 and TP23, and second and third n-MOS transistors TN22 and TN23. The respective gate electrodes of the second p-MOS transistor TP22 and the second n-MOS transistor TN22 are connected with each other, thereby constituting an input terminal for receiving the output from the first inverter circuit 81. The respective gate electrodes of the third p-MOS transistor TP23 and the third n-MOS transistor TN23 are connected with each other, thereby constituting an input terminal for receiving the power cutoff signal 42. The drain electrode of the second p-MOS transistor TP22 and the drain electrodes of the second and third n-MOS transistors TN22 and TN23 constitute an output terminal for outputting the inter-block signal 84. The source electrode of the second p-MOS transistor TP22 is connected to the drain electrode of the third p-MOS transistor TP23, and the source electrode of the third p-MOS transistor TP23 is connected to the first internal power supply line 31, thereby being supplied with the power supply voltage VDD1. The source electrodes of the first and second n-MOS transistors TN22 and TN23 are connected to the ground line GND.

The input of the second inverter circuit 86 that is provided in the second function block 12 is connected to the inter-block signal 84. This second inverter circuit is constituted by a fourth p-MOS transistor TP24 and a fourth N-MOS transistor TN24. The respective gate electrodes of the fourth p-MOS transistor TP24 and the fourth n-MOS transistor TN24 are connected with each other, thereby constituting an input terminal for receiving an output signal from the two-input NOR circuit 82. The source electrode of the first p-MOS transistor TP24 is connected to the power voltage VDD2, and the source electrode of the first n-MOS transistor TN24 is connected to the ground lien GND. The drain electrode of the first p-MOS transistor TP24 and the drain electrode of the first n-MOS transistor TN24 are connected with each other, thereby constituting an output terminal.

Next, the operation of the multiple power source semiconductor integrated circuit 1c that is constructed as described above, while the supply of power is halted, will be described.

Figure 7 is a diagram showing an operation in a case where the power cutoff signal 42 is fixed at "H" level and the supply of power to the second function block 12 is halted.

In this case, the third p-MOS transistor TP23 in the two-input NOR circuit 82 that is included in the first function block 11 turns in an OFF state, and the third n-MOS transistor TN23 turns in an ON state.

As described above, according to the multiple power source semiconductor integrated circuit 1c of the fourth embodiment, when the supply of power to the second function block 12 is halted in accordance with the power cutoff signal 42, the inter-block signal 84 for the second function block 12 is fixed at "L" level. Therefore, a "L" level signal is supplied to the second inverter circuit that is included in the second function block 12 while the supply of power is halted, whereby it is possible to avoid deterioration in the characteristics of the p-MOS transistor due to application of a "H" level voltage for a long time to the gate electrode of the p-MOS transistor in a state where the supply of power is halted.

This fourth embodiment describes an example where the first inverter circuit 81 and the two-input NOR circuit 82 are provided in the first function block 11, and the second inverter circuit 86 is provided in the second function block 12. However, it is also possible that an inverter circuit and a two-input NOR circuit that outputs a NOR between an output from the inverter circuit and the power cutoff signal as an inter-block signal are provided at respective output stages of the first to fourth function blocks 11 to 14, the input/output terminal 15 and the power supply control circuit 40, and an inverter circuit to which the inter-block signal from a function block that is connected in the preceding stage is inputted, is provided at respective input stages thereof. Accordingly, when the supply of power to the first to fourth function blocks 11 to 14, the input/output terminal circuit 15, and the power supply control circuit 40 are halted, a "L" level signal is supplied to a function block that is connected in the following stage, whereby it is possible to avoid deterioration in the characteristics of the p-MOS transistor due to application of a "H" level voltage for a long time to the gate electrode of the p-MOS transistor which is in a state where the supply of power is halted.

### (Embodiment 5)

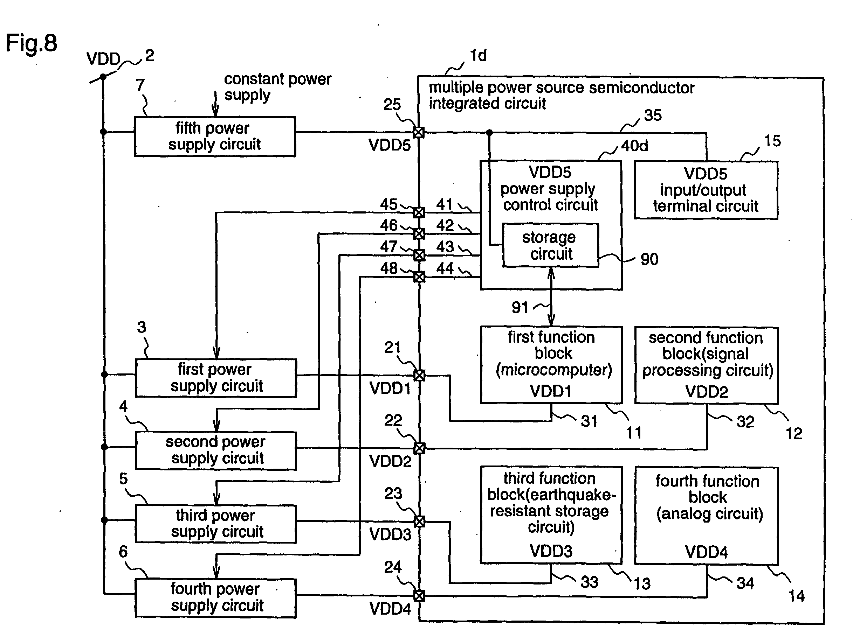

An example corresponding to a multiple power source semiconductor integrated circuit as defined in Claim 6 of the present invention will be described as a fifth embodiment, with reference to figure 8.

Figure 8 is a block diagram illustrating structures of a multiple power source semiconductor integrated circuit 1d according to the fifth embodiment, and power supply circuits for the multiple power source semiconductor integrated circuit 1d. In figure 8, the same or corresponding components as those in figure 1 are denoted by the same references, and their detailed descriptions will not be given.

In the multiple power source semiconductor integrated circuit 1d according to the fifth embodiment, a power supply control circuit 40d is constantly supplied with power, and a storage circuit 90 that is capable of recording or reading data from the first function block 11 via a signal group 91 is provided in the power supply control circuit 40d.

Here, the first function block 11 is a microcomputer for controlling the system, and is designed to record data that are required for the system operation (key operation, display setting, setting of volumes, or the like) into the storage circuit 90 via the signal group 91 before halting the supply of power, and read the data that are stored in the storage circuit 90 immediately after restarting the supply of power.

Next, the operation of the multiple power source semiconductor integrated circuit 1d that is constructed as described above will be described.

The supply of power to the respective function blocks 11 to 14 are performed in the same manner as described in any of the first to third embodiments. Before stopping the power supply to itself, the first function block 11 records data of the system operation (key operation, display setting, setting of volumes or the like) into the storage circuit 90 of a state where the power is constantly supplied, and then halts the supply of power. Since the storage circuit 90 is constantly supplied with power even when the supply of power to the all function blocks 11 to 14 is halted, the data that are recorded in the storage circuit 90 immediately before the supply of power are not lost and held. The first function block 11 reads the data that are held in the storage circuit 90 immediately after restart of the supply of power, and restarts the processing from the previous state before the halt of the supply of power.

As described above, according to the multiple power source semiconductor integrated circuit 1d of the fifth embodiment, the power supply control circuit 40d is controlled to be constantly supplied with power, and is provided with the storage circuit 90, for which data are recorded or read by the first function block 11, and data which are required for the system operation are recorded in the storage circuit 90 before halting the supply of power, and are held while the supply of power is halted, whereby it is possible to eliminate the need of repeating the setting which has been performed before halting the supply of power, by reading the stored data after restart of the supply of power.

### (Embodiment 6)

According to the aforementioned multiple power source semiconductor integrated circuit of any of the first to fifth embodiment, the power supply control circuit 40 and the input/output terminal circuit 15 employ the same power source, for example as shown in figure 1. This is quite important in implementing the same function as in the case where the signal processing circuit and the microcomputer are provided on separate semiconductor integrated circuits, in the multiple power source semiconductor integrated circuit of any of these embodiment. The conventional microcomputer has a function of constantly performing control of peripheral circuits at the same time of receiving a control signal from outside in a state where the power is constantly supplied. On integrating such microcomputer, when power is constantly supplied also to the input/output terminal circuit that controls the peripheral circuits, at least the state of the input/output terminal (inputting, H level outputting, L level outputting) can be maintained, thereby preventing malfunctions of electronic devices due to instability of a control signal for the peripheral circuits.

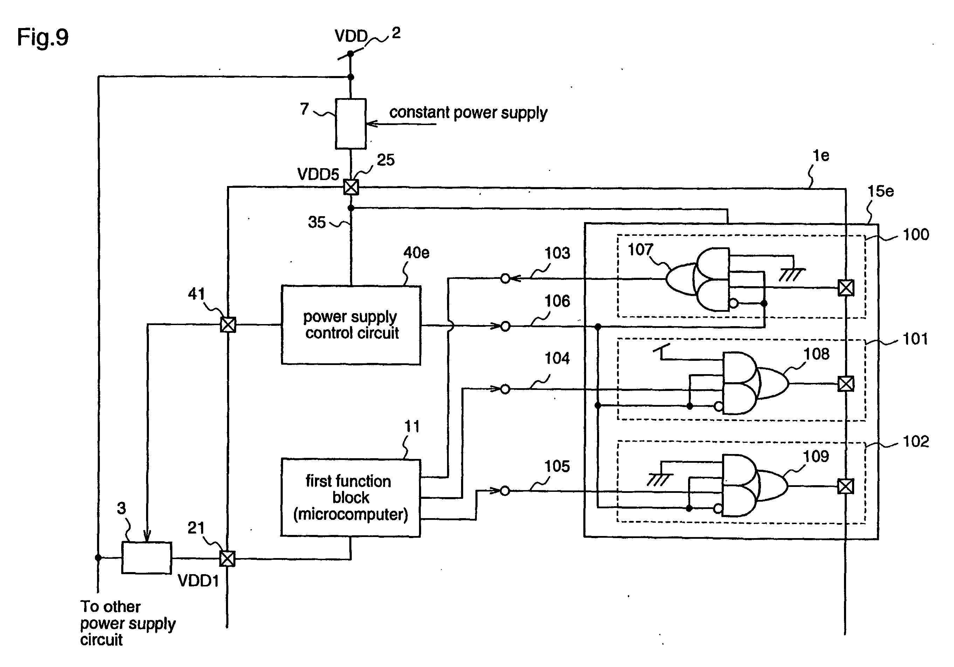

Hereinafter, an example corresponding to a multiple power source semiconductor integrated circuit as defined in Claim 7 of the present invention will be described as a sixth embodiment, with reference to figures 9 to 11.

Figure 9 is a block diagram illustrating structure of a principal part of a multiple power source semiconductor integrated circuit 1e according to the sixth embodiment, and power supply circuits for the multiple power source semiconductor integrated circuit 1e. In figure 9, the same or corresponding components as those in figure 2 are denoted by the same references, and their detailed descriptions will be omitted.

In the multiple power source semiconductor integrated circuit 1e according to the sixth embodiment, an input/output terminal circuit 15e has an input terminal 100 for receiving an external signal, a first output terminal 101 for outputting "H" level when a power source 21 for the first function block 11 is cut, and a second output terminal 102 for outputting "L" level when the power source 21 for the first function block 11 is cut. For the sake of simplicity, it is assumed in the following description that one input terminal 11, one first output terminal 101, and one second output terminal 102 are provided, while the number of any of these terminals may be zero, or two or more.

An output 103 of the input terminal 100, an input 104 of the first output terminal 101, and an input 105 of the second output terminal 102 are respectively connected to the first function block 11 which is a microcomputer for controlling the system. Further, switching circuits 107 to 109 to which a terminal hold signal 106 that is outputted from the power supply control circuit 40 is inputted, to switch signal levels in accordance with the inputted terminal hold signal 106 are provided in the terminals, respectively.

In addition, while not shown in detailed in the figure, the power supply control circuit 40e is designed like the power supply control circuit 40a according to the second embodiment so that when the first interrupt signal 55 or the second interrupt signal 56 becomes "H" level, a first power supply cutoff signal 41 that is outputted from the RS latch circuit 51 becomes "L" level, thereby starting supply of power.

Further, the input/output terminal circuit 15e and the power supply control circuit 40e are supplied with the power supply voltage VDD5 that is obtained by transforming the main power 2 by means of the fifth power supply circuit 7.

Next, the operation of the multiple power source semiconductor integrated circuit 1e that is constructed as described above will be described.

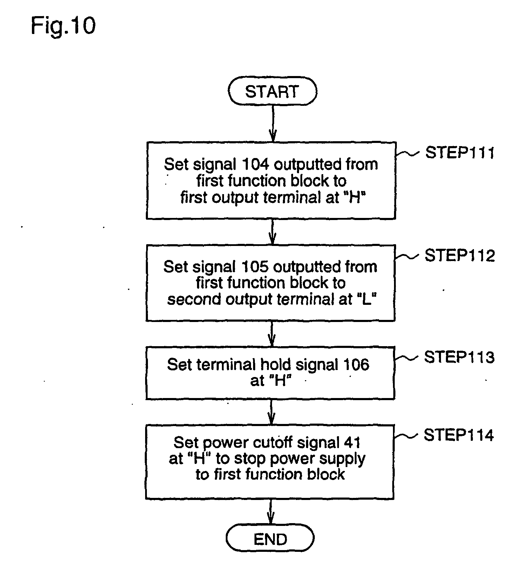

Initially, an operation procedure which is performed by the multiple power source semiconductor integrated circuit 1e when halting supply of power to the first function block 11 will be described with reference to a flowchart of figure 10.

In halting the supply of power to the first function block 11, the first function block 11 sets an input (a signal that is outputted from the first function block to the first output terminal) 104 to the first output terminal 101 at "H" level (STEP 111). Next, the function block 11 sets an input (a signal that is outputted from the first function block to the second output terminal) 105 to the second output terminal 102 at "L" level (STEP 112). Next, the terminal hold signal 106 is set at "H" level (STEP 113).

When the terminal hold signal 106 becomes "H" level, the input terminal 100 switches the switching circuit 107 to fix the output 103 at "L" level. Further, the first output terminal 101 and the second output terminal 102 switch the switching circuits 108 and 109, to fix levels of signals that are externally outputted at "H" level and "L" level, respectively. By this operation, the input terminal 100, the first output terminal 101, and the second output terminal 102 are isolated from the control that is performed by the first function block 11 while the state in which the first function block 11 is operating is maintained. Subsequently, the first function block 11 sets the power cutoff signal 41 at "H" level, to halt the supply of power to the first function block 11 (STEP 114).

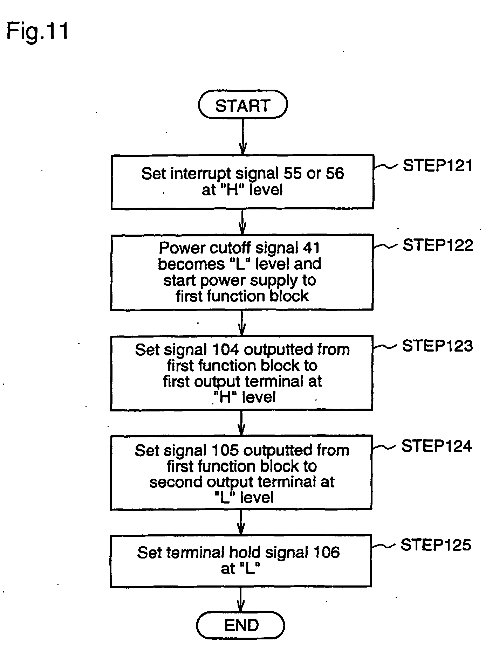

Next, the operation procedure in starting the supply of power to the second function block 12 will be described with reference to a flowchart of figure 11.

The supply of power is started by setting the first interrupt signal 55 or the second interrupt signal 56 (not shown in figure 9) at "H" level as described in the second embodiment (STEP 121). When the first interrupt signal 55 or the second interrupt signal 56 becomes "H" level, the first power cutoff signal 41 that is outputted from the RS latch circuit 51 becomes "L" level. Thereby, the first power supply circuit 3 starts the supply of power to the first function block 11 (STEP 122).

When supplied with power, the first function block 11 sets the input 104 of the first output terminal 101 at "H" level (STEP 123), and sets the input 105 of the second output terminal 102 at "L" level (STEP 124). Next, by setting the terminal hold signal 106 at "L" level, the output of the first function block 11 is outputted to the first output terminal 101 and the second output terminal 102 (STEP 125).

As described above, in the multiple power source semiconductor integrated circuit 1e according to the sixth embodiment, the input/output terminal circuit 15e includes the input terminal 100 for receiving an external signal, the first output terminal 101 for outputting "H" level when the power source 21 of the function block 11 is cut off, and the second output terminal 102 for outputting "L" level when the power source 21 of the function block 11 is cut off. Therefore, even in cases where the first function block 11 as a microcomputer for controlling the system controls external circuits, it is possible to halt supply of power to the first function block 11 and restart the supply of power, without exerting any influence upon the external circuits.

### (Embodiment 7)

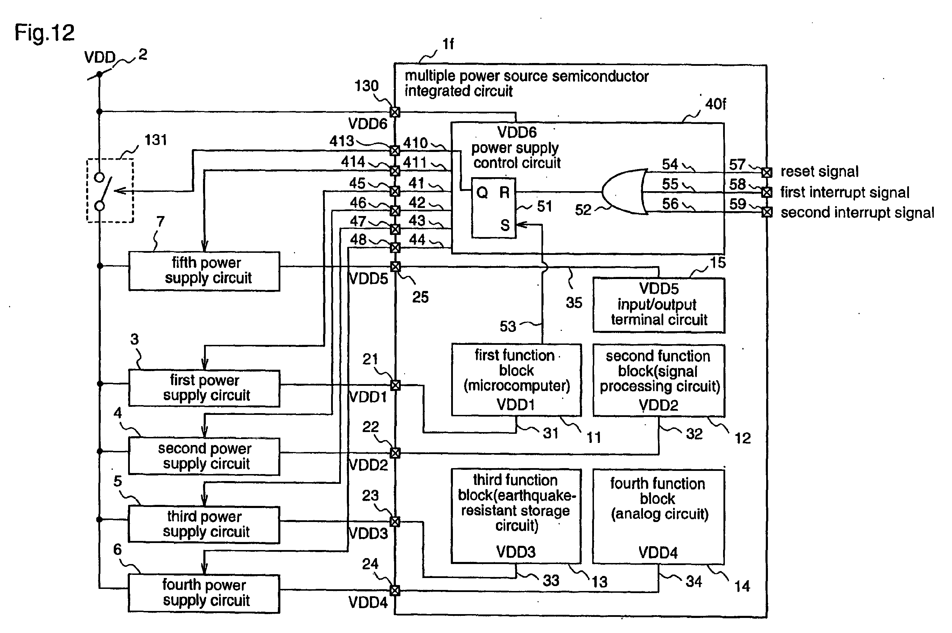

An example corresponding to a multiple power source semiconductor integrated circuit as defined in Claim 8 of the present invention will be described as a seventh embodiment, with reference to figure 12.

In many cases, batteries are employed as the main power for a portable electronic device. For example, when the multiple power source semiconductor integrated circuit 1e according to the sixth embodiment is mounted on a portable electronic device, it is important to reduce power consumption of the first to fifth power supply circuits 3 to 7 in view of the entire power consumption of the portable electronic device. The fifth power supply circuit 7 operates to constantly supply power, but since the power efficiency of the DC/DC converter as a common power supply circuit is about 80% to 90%, the corresponding power is consumed. Also in the first to fourth power supply circuits 3 to 7, because the power is supplied to the power supply circuits themselves, leakage currents flow through the respective power supply circuits even when the supply of power to the multiple power source semiconductor integrated circuit 1e is halted, resulting in battery consumption. An object of the seventh embodiment is to minimize such power consumption by the power supply circuits.

Figure 12 is a block diagram illustrating structures of a multiple power source semiconductor integrated circuit 1f according to the seventh embodiment, and power supply circuits for the multiple power source semiconductor integrated circuit 1f. In figure 12, the same or corresponding components as those in figure 1 are denoted by the same references, and their descriptions will not be given.

According to the multiple power source semiconductor integrated circuit 1f of the seventh embodiment, the power supply control circuit 40f outputs a power cutoff signal 410 for controlling a main power cutoff circuit 131 as a gate of supply of the main power 2 to the first to fifth power supply circuits 3 to 7, through a fifth output terminal 413, and directly receives power supply (a power supply voltage VDD6) from the main power 2 through a sixth external power supply terminal 130, and the first to fourth function blocks 11 to 14 and the input/output terminal circuit 15 are supplied with power by the power supply circuits 3 to 7 that are controlled by the power supply control circuit 40f. In figure 12, reference numeral 411 denotes a fifth power cutoff signal that is outputted from the power supply control circuit 40f for controlling supply of power by the fifth power supply circuit 7 and halt of the supply of power, and numeral 414 denotes a fifth external output terminal for outputting the fifth power cutoff signal 411 from the multiple power source semiconductor integrated circuit 1f.

The main power cutoff circuit 131 is constituted, for example, by an FET (Field Effect Transistor), and has a structure of stopping respective supply of power to the power supply circuits 3 to 7 in accordance with a "H" level output of the power cutoff signal 4f.

In this seventh embodiment, the FET is used as the main power cutoff circuit 131. However, any circuit such as a magnetic relay circuit can be employed so long as it can cut off the power that is supplied to the first to fifth power supply circuits 3 to 7 in accordance with the power cutoff signal 410.

Next, the operation of the multiple power source semiconductor integrated circuit 1f that is constructed as described above when halting the supply of power will be described.

On halting the supply of power, the first function block 11 which is a microcomputer for controlling the system instructs the power supply control circuit 40f to set the power cutoff signal 410 at "H" level. When the power cutoff signal 410 becomes "H" level, the main power cutoff circuit 131 halts the supply of power to the power supply circuits 3 to 7.

As described above, according to the multiple power source semiconductor integrated circuit 1f of the seventh embodiment, the power supply control circuit 40f is supplied with power directly from the main power 2 via the sixth external power supply terminal 130, only the input/output terminal circuit 15 is supplied with power from the fifth power supply circuit 7, and then the power supply control circuit 40f outputs the power cutoff signal 410 for controlling the main power cutoff circuit 131 as a gate for supply of the main power 2 to the first to fifth power supply circuits 3 to 7 through the fifth output terminal 413, as well as outputs the fifth power cutoff signal 411 for controlling supply of power and halt of the power supply by the fifth power supply circuit 7 through the fifth external output terminal 414. Therefore, by halting supply of power to the first to fourth function blocks 11 to 14 and the input/output terminal circuit 15, it is possible to eliminate the power consumption by the power supply circuits 3 to 7, thereby reducing consumption of the main power 2.

Here, it is desirable that the power supply control circuit 40 is an asynchronous structure which comprises the RS latch circuit 51 and the three-input OR circuit 52. When the main power supply 2 is batteries and the multiple power source semiconductor integrated circuit 1f is operated by the voltage of the batteries, variations in the voltage present problems. For example, when a nickel metal hydride secondary battery is employed, the power supply voltage varies from about 1.5V to 0.9V. While the operation of the semiconductor device becomes slower when the voltage becomes lower, the RS latch circuit 51 and the three-input OR circuit 52 forming an asynchronous structure can be made perform an operation as the power supply control circuit 40 even when the battery voltage is lowered to such an extent that a synchronous design circuit operating in accordance with a reference clock which is generated does not operate.

### Industrial Availability

A multiple power source semiconductor integrated circuit according to the present invention in which a function block for performing signal processing and a microcomputer are integrated halts supply of power to a function block that is not being used. thereby reducing unnecessary power consumption. This circuit is useful because, for example, it is possible to elongate an operating time per battery in a portable electronic device that is driven by batteries.

## Claims

1. A multiple power source semiconductor integrated circuit including:
plural function blocks that are supplied with power from different power supply circuits, respectively;
a microcomputer for controlling the supply of power to the plural function blocks, said microcomputer being one of said plural function blocks; and
a power supply control circuit for controlling the supply' of power by the power supply circuits under the control of the microcomputer.

2. The multiple power source semiconductor integrated circuit as defined in Claim 1 wherein
the power supply control circuit halts the supply of power to the microcomputer by the power supply circuit when receiving predetermined data from the microcomputer, and restarts the supply of power to the microcomputer by the power supply circuit when receiving an interrupt signal from outside.

3. The multiple power source semiconductor integrated circuit as defined in Claim 1 or 2 wherein
the power supply control circuit includes a register for storing the interrupt signal, and
the microcomputer detects contents of the interrupt signal that is stored in the register, after restart of the supply of power.

4. The multiple power source semiconductor integrated circuit as defined in any of Claims 1 to 3 wherein
the power supply control circuit outputs a power cutoff signal to the power supply circuits when the supply of power by the plural power supply circuits is to be halted, and
the function blocks and the power supply control circuit each include an inter-block signal fixing circuit for fixing an input logic from a circuit to which supply of power is halted, at "L" or "H" level in accordance with the power cutoff signal.

5. The multiple power source semiconductor integrated circuit as defined in any of Claims 1 to 4 wherein
the power supply control circuit outputs a power cutoff signal to the power supply circuits when the supply of power by the plural power supply circuits is to be stopped, and
the function blocks and the power supply control circuit each include an inter-block signal fixing circuit for fixing an output logic to a circuit that is in a state where the supply of power is halted, at "L" level in accordance with the power cutoff signal.

6. The multiple power source semiconductor integrated circuit as defined in any of Claims 1 to 5 including:
a storage means which is always supplied with power and retains system information while the supply of power to the respective function blocks is halted.

7. The multiple power source semiconductor integrated circuit as defined in any of Claims 1 to 6 including:
an input/output terminal circuit for giving and receiving a signal to/from outside, and
the power supply control circuit and the input/output terminal operate on power that is supplied from a common power supply circuit.

8. The multiple power source semiconductor integrated circuit as defined in any of Claims 1 to 6 wherein
the power supply control circuit operates on power that is supplied to the plural power supply circuits, and outputs an all power cutoff signal for stopping the supply of power by all of the plural power supply circuits.
